# EUROPÄISCHE PATENTSCHRIFT

(11) **EP 2 875 159 B1**
(45) Veröffentlichungstag und Bekanntmachung des Hinweises auf die Patenterteilung: **15.06.2016**
(21) Anmeldenummer: 13734368.7
(22) Anmeldetag: 25.06.2013
(51) Int. Cl.: C21C 5/52, F27B 3/08, F27B 3/28, F27D 11/08, G05F 1/66, G05F 1/70, G05F 5/00, H02J 3/01, H02J 3/18, F27D 19/00

(54) **FLICKERREDUKTION BEI ELEKTROLICHTBOGENÖFEN DURCH FLICKERVORHERSAGE AUS DER ZUSTANDSBESTIMMUNG IN DER ANFANGSPHASE DES SCHMELZPROZESSES**
FLICKER REDUCTION IN ELECTRIC ARC FURNACES BY MEANS OF FLICKER PREDICTION FROM THE STATE DETERMINATION IN THE INITIAL PHASE OF THE SMELTING PROCESS
RÉDUCTION DU SCINTILLEMENT DANS LES FOURS À ARC ÉLECTRIQUE PAR PRÉDICTION DU SCINTILLEMENT À PARTIR DE LA DÉTECTION D'ÉTAT AU COURS DE LA PHASE INITIALE DU PROCESSUS DE FUSION

(30) Priorität: 25.09.2012 DE 102012217232
(43) Veröffentlichungstag der Anmeldung: 27.05.2015
(73) Patentinhaber: Siemens Aktiengesellschaft, 80333 München (DE)
(72) Erfinder: DÖBBELER, Arno, 91074 Herzogenaurach (DE); ENGELS, Ralf, 91336 Heroldsbach (DE); MATSCHULLAT, Thomas, 90542 Eckental (DE); MEUSEL, Wolfgang, 91074 Herzogenaurach (DE); RIEGER, Detlef, 85598 Baldham (DE)
(86) Internationale Anmeldenummer: PCT/EP2013/063207
(87) Internationale Veröffentlichungsnummer: WO 2014/048595

(56) Entgegenhaltungen:
- EP-A1- 0 896 067
- US-A- 5 991 327
- FARINA J ET AL: "A methodology for determining the frequency response of electrodes in arc furnaces for silicon metal production", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, Bd. 1, 12. Oktober 2003 (2003-10-12), Seiten 105-110, XP010675969, DOI: 10.1109/IAS.2003.1257491 ISBN: 978-0-7803-7883-4

## Beschreibung

Die Erfindung betrifft ein Verfahren und eine Vorrichtung zur Flickerreduktion bei der Stahlerzeugung mittels Elektrolichtbogenöfen.

In Lichtbogenöfen wird zur Stahlherstellung vorwiegend Schrott eingeschmolzen. Vor allem Lichtbogenöfen, die zu 100 % Schrott verwenden, erzeugen Netzrückwirkungen, welche das betreffende Energieversorgungsunternehmen häufig bei Überschreiten von bestimmten Grenzwerten mit Vertragsstrafen belegt. Daher werden in Stahlwerken Kompensationsanlagen (SVC) installiert, um Netzrückwirkungen wie Flicker und Oberschwingungen zu reduzieren, um vorgegebene Grenzewerte einzuhalten. Derartige SVC-Systeme reagieren jedoch lediglich im Nachgang zur bereits erzeugten Netzstörung auf die im Lichtbogenofen beim Schrotteinschmelzen erzeugten Oberschwingungen oder Flicker und können besonders, wenn die Lichtbogenöfen an schwachen Versorgungsnetzen betrieben werden, nicht immer die vorgeschriebenen Grenzwerte einhalten.

Zur Vermeidung zu hoher Flickerwerte sind verschiedene herkömmliche Abhilfemaßnahmen bekannt. DE2742221, DE2742221, EP0896067 und US5991327 offenbaren derartige Verfahren. Beispielsweise wird ein flickerarmer Einschmelzbetrieb vorgeschlagen, bei dem entsprechend gewählter Schrottmix mit einem kleinsten KSt-Wert, Zusatzreaktanzen im Ofenkreis und eine regelungstechnische Parametrierung zur Lichtbogenstabilisierung genutzt werden. Dabei ist der KSt-Wert der Wert, der insbesondere die Art, Schwere und Dichte des Schrotts beschreibt. Gemäß UIE liegt dieser Wert zwischen 48 und 85. Als Zusatzreaktanz im Ofenkreis kann beispielsweise eine Ofentrafovordrossel verwendet werden. Zusätzlich sind seit Jahrzehnten so genannte Kompensationsanlagen (SVC) herkömmlicher Weise im Einsatz, mit denen der erzeugte Flicker auf ca. die Hälfte verringert werden kann. Ebenso sind herkömmliche SVC-Systeme mit Spannungsquellenumrichter auf IGBT- (Insulated Gate Bipolar Transistor-) Basis bekannt, die dann eingesetzt werden, wenn die Flickerreduzierung mehr als das Doppelte sein soll.

Diese herkömmlichen Maßnahmen sind jedoch entweder mit hohen Investitions- und Betriebskosten oder mit Einbußen bei der Produktion verbunden. Nicht nur die Schrottzusammensetzung und -qualität haben Einfluss auf Netzrückwirkungen, ebenso die Regelungsperformance der Elektrodenregelung und die Fahrweise in der Schrotteinschmelzphase können sich auf die Generierung von Netzrückwirkungen bemerkbar machen. So bleibt das Erkennen von Schrottbewegungen und Schrotteinstürzen weitgehend dem Bedienpersonal vorbehalten. Eine herkömmliche Elektrodenregelung kann hier lediglich auf diese Ereignisse nachträglich reagieren. Es sind lediglich herkömmliche Ansätze bekannt, die nachträglich in den Stahlerzeugungsprozess eingreifen. Entsprechend kann eine herkömmliche Kompensationsanlage lediglich auf die Zustände beim Einschmelzen reagieren und oft werden dann die vorgegebenen Grenzwerte überschritten.

Es ist Aufgabe ein Verfahren und eine Vorrichtung zur Flickerreduktion bei der Stahlerzeugung mittels Elektrolichtbogenöfen derart bereit zu stellen, dass Netzrückwirkungen, insbesondere Flicker, wirksam verringert und Grenzwerte mit einer hohen Wahrscheinlichkeit eingehalten werden. Zusätzlich soll eine größtmögliche Einschmelzperformance beziehungsweise eine größtmögliche Leistungseinbringung der Öfen bewirkt werden.

Die Aufgabe wird durch ein Verfahren gemäß dem Hauptanspruch und eine Vorrichtung gemäß dem Nebenanspruch gelöst.

Gemäß einem ersten Aspekt wird ein Verfahren zur Flickerreduktion bei einer Stahlerzeugung mittels eines Elektrolichtbogenofens vorgeschlagen, wobei mittels einer Speichereinrichtung ein Bereitstellen einer Flickerdatenbank erfolgt, in der zeitliche Gesamtverläufe von Momentanflicker in Abhängigkeit von Zustands- und Betriebsgrößen gespeichert werden; mittels einer Erfassungseinrichtung während einer anfänglichen Einschmelzphase der Stahlerzeugung ein Messen eines zeitlichen Verlaufs von Momentanflicker und ein Bestimmen von dazugehörigen Zustands- und Betriebsgrößen erfolgt; mittels einer Recheneinrichtung ein Vergleichen des gemessenen zeitlichen Verlaufs von Momentanflicker während der Einschmelzphase mit den gespeicherten zeitlichen Verläufen der Einschmelzphasen der Gesamtverläufe der Flickerdatenbank unter Berücksichtigung der Zustands- und Betriebsgrößen erfolgt; mittels der Rechnereinrichtung ein Auswählen eines zeitlichen Gesamtverlaufs mit maximaler Übereinstimmung von Momentanflicker sowie Zustands- und Betriebsgrößen als ein vorhergesagter Gesamtverlauf des Flicker aufgeführt wird und mittels einer Steuerungseinrichtung ein präventives dynamisches Anpassen des weiteren Steuerns des Stahlerzeugungsprozesses bei Vergleichen des vorhergesagten Gesamtverlaufs mit vorgegebenen Grenzwerten für Flicker ausgeführt wird.

Gemäß einem zweiten Aspekt wird eine Vorrichtung zur Flickerreduktion bei einer Stahlerzeugung mittels eines Elektrolichtbogenofens vorgeschlagen, wobei eine Speichereinrichtung eine Flickerdatenbank bereitstellt, in der zeitliche Gesamtverläufe von Momentanflicker in Abhängigkeit von Zustands- und Betriebsgrößen gespeichert sind; eine Erfassungseinrichtung während einer anfänglichen Einschmelzphase der Stahlerzeugung einen zeitlichen Verlauf von Momentanflicker misst und dazugehörige Zustands- und Betriebsgrößen bestimmt; eine Rechnereinrichtung den gemessenen zeitlichen Verlauf von Momentanflicker während der Einschmelzphase mit den gespeicherten zeitlichen Verläufen der Einschmelzphasen der Gesamtverläufe der Flickerdatenbank unter Berücksichtigung der Zustands- und Betriebsgrößen vergleicht; die Rechnereinrichtung einen zeitlichen Gesamtverlauf mit maximaler Übereinstimmung von Momentanflicker sowie Zustands- und Betriebsgrößen als ein vorhergesagter Gesamtverlauf des Flicker auswählt; eine Steuerungseinrichtung, das weitere Steuern des Stahlerzeugungsprozesses bei Vergleichen des vorhergesagten Gesamtverlaufs mit vorgegebenen Grenzwerten für Flicker präventiv dynamisch anpasst.

Grundsätzlich schließt der hier gewählte Begriff "Steuerung" alternativ oder kumulativ den Begriff "Regelung" mit ein.

Gemäß der vorliegenden Erfindung wird ein Ansatz für ein präventives, automatisiertes Eingreifen vorgeschlagen. Es wird eine vorausschauende Flickerbestimmung vorgeschlagen. Der Begriff "präventiv" meint hier insbesondere "vorausschauend, Problem vermeidend".

Mittels einer datentechnischen Analyse einer aktuellen Betriebssituation in einer Anfangsphase eines Schmelzprozesses im Vergleich mit einer Flickerwissensdatenbank kann vorteilhaft auf die zukünftige Entwicklung des Flickers geschlossen werden. Auf diese Weise lässt sich dynamisch eine optimierte Einschmelzfahrweise einstellen, die eine höchstmögliche Performance beziehungsweise ein höchstmögliches Leistungsvermögen und zugleich eine Begrenzung des Flickers auf vorgegebene Grenzwerte ermöglicht. Eine Realisierung kann insbesondere im Rahmen einer neuen, intelligenten, vorausschauenden und zustandsorientierten Elektrodenregelung und Einschmelzkontrolle erfolgen, so dass weitere Vorteile beim Elektrolichtbogenofen verwirklicht werden können.

Erfindungsgemäß ist erkannt worden, dass die zu erwartenden Flickerwerte sich mit einer relativ hohen Sicherheit aus geeigneten Zustands- und Betriebsgrößen bestimmen lassen, die während der ersten Minuten in einer Einschmelzphase bestimmt werden. Während dieser Zeit bohren sich die Lichtbögen durch den Schrott. Diese Phase wird daher als Bohrphase bezeichnet. Der dabei entstehende Momentanflicker ist zu einem gewissen Grad symptomatisch für die Schmelze und kann zusammen mit anderen gemessenen Zustandsgrößen für eine Flickervorhersage verwendet werden.

Weitere vorteilhafte Ausgestaltungen werden in Verbindung mit den Unteransprüchen beansprucht.

Gemäß einer vorteilhaften Ausgestaltung können jeweils Größe und Steigung von Momentanflicker gespeichert und gemessen werden.

Gemäß einer weiteren vorteilhaften Ausgestaltung können Zustands- und Betriebsgrößen eine Korbnummer, eine Stahlgüte, elektrische Parameter und/oder Schrottparameter sein.

Gemäß einer weiteren vorteilhaften Ausgestaltung kann eine jeweilige anfängliche Einschmelzphase jeweils eine Bohrphase und eine Einsturzphase für jeweils mittels eines Korbes eingebrachten Schrott aufweisen, wobei das Messen und das Bestimmen jeweils während der ersten hundert bis zweihundert Sekunden nach dem Schmelzen des eingebrachten Schrotts erfolgen kann.

Gemäß einer weiteren vorteilhaften Ausgestaltung können die vorhergesagten Flickerwerte kleiner als die vorgegebenen Grenzwerte sein, so dass die Steuereinrichtung im Stahlerzeugungsprozess zum Erreichen maximalen Leistungsvermögens bei optimalem Energieeintrag steuern kann.

Gemäß einer weiteren vorteilhaften Ausgestaltung können vorhergesagte Flickerwerte größer als die vorgegebenen Grenzwerte sein, so dass die Steuereinrichtung den Stahlerzeugungsprozess während der Zeitdauern der als größer vorhergesagten Flickerwerte zur Flickerreduzierung angepasst steuern kann.

Gemäß einer weiteren vorteilhaften Ausgestaltung kann die Steuereinrichtung die Zusatzinformation berücksichtigen dass die als größer vorhergesagten Flickerwerte für einen jeden Korb bevorzugt am Ende einer Bohrphase und/oder während einer Einsturzphase auftreten.

Gemäß einer weiteren vorteilhaften Ausgestaltung kann die Steuerungseinrichtung während der Zeitdauern der als größer vorhergesagten Flickerwerte die Induktivität des Elektrolichtbogenofens mittels höherer Drosselstufen oder Hinzuschalten einer Drossel vergrößern.

Gemäß einer weiteren vorteilhaften Ausgestaltung kann die Steuerungseinrichtung während der Zeitdauern der als größer vorhergesagten Flickerwerte eine Elektrodenregelung für kurze Lichtbögen mit größeren Strömen einstellen.

Gemäß einer weiteren vorteilhaften Ausgestaltung kann die Steuerungseinrichtung während der Zeitdauer der als größer vorhergesagten Flickerwerte periodische Bewegungen in den Lichtbögen einprägen.

Gemäß einer weiteren vorteilhaften Ausgestaltung kann die Steuerungseinrichtung während der Zeitdauer der als größer vorhergesagten Flickerwerte eine bereits vorhandene Kompensationsanlage dynamisch angepasst neu parametrieren.

Gemäß einer weiteren vorteilhaften Ausgestaltung können die vorhergesagten Flickerwerte in einem Grenzbereich zu den vorgegebenen Grenzwerten liegen, so dass die Steuerungseinrichtung den Stahlerzeugungsprozess zwischen maximalem Leistungsvermögen und Flickerreduktion angesteuert schalten kann.

Gemäß einer weiteren vorteilhaften Ausgestaltung kann die Steuerungseinrichtung den Stahlerzeugungsprozess während der Zeitdauern am Ende einer Bohrphase für einen jeden Korb und während einer Einsturzphase zur Flickerreduzierung angepasst steuern.

Die Erfindung wird anhand von Ausführungsbeispielen in Verbindung mit den Figuren näher beschrieben. Es zeigen
- Figur 1: ein erstes Ausführungsbeispiel eines Momentanflickerverlaufs;
- Figur 2: ein zweites Ausführungsbeispiel eines Momentanflickerverlaufs;
- Figur 3: ein drittes Ausführungsbeispiel eines Momentanflickerverlaufs;
- Figur 4: ein Ausführungsbeispiel eines erfindungsgemäßen Verfahrens.

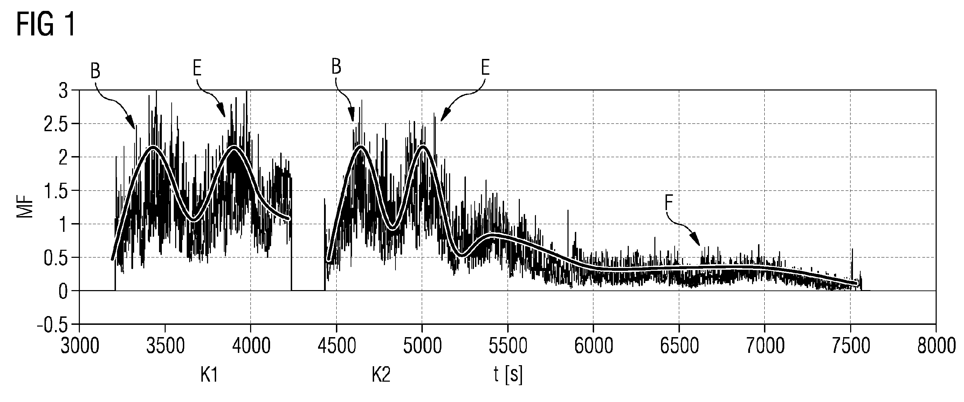

Figur 1 zeigt ein Ausführungsbeispiel eines

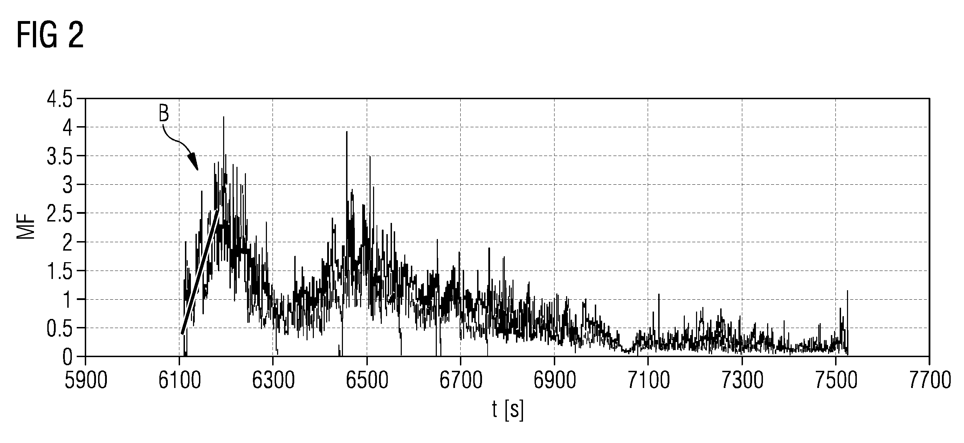

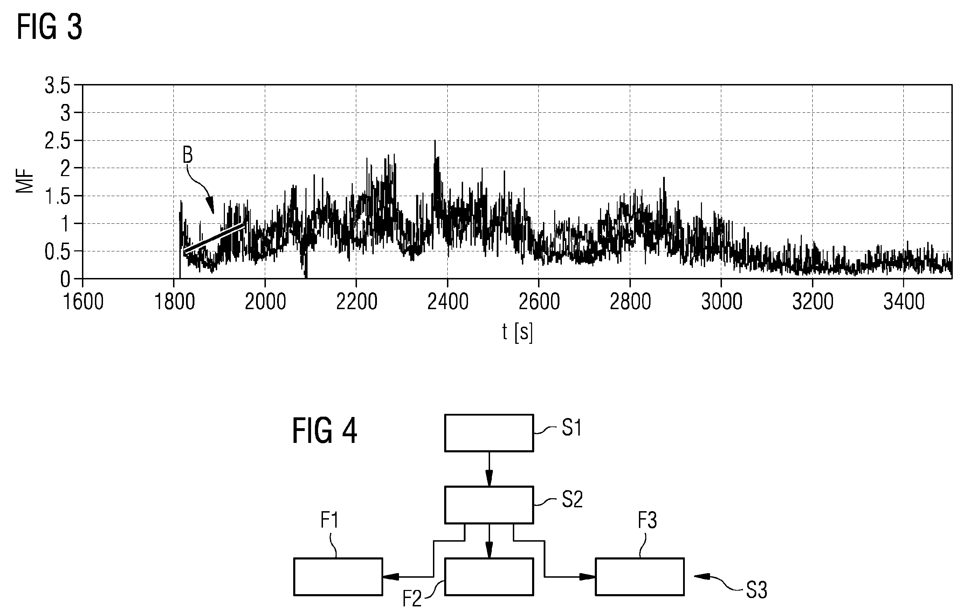

Momentanflickerverlaufs. Figur 1 zeigt einen typischen Verlauf eines Momentanflickers einer Schmelze. Auf der Rechtswertachse ist die Zeit t in Sekunden s aufgetragen. Die Hochwertachse gibt numerische Werte zum Momentanflicker an. Zwischen 3200 Sekunden und 4200 Sekunden wird der Schrott eines ersten Korbes geschmolzen. Diese anfängliche Einschmelzphase teilt sich in eine Bohrphase B und eine Einsturzphase E auf. Innerhalb des Zeitfensters von 4500 Sekunden bis 5200 Sekunden wird in einem zweiten Korb befindlicher Schrott im Lichtbogenofen eingeschmolzen. Auch für diesen zusätzlichen Schritt teilt sich die Einschmelzphase in die Bohrphase B und in die Einsturzphase E auf. Beispielsweise kann ein dritter Korb mit Schrott den Momentanflickerverlauf beeinflussen. Gemäß Figur 1 schließt sich der zweiten Einsturzphase E eine Flüssigphase F an. MF bezeichnet Momentanflicker. Figur 1 zeigt einen typischen Verlauf des Momentanflickers während einer kompletten Charge. Der Momentanflicker wurde für jede der drei Phasen auf der Hochspannungsseite mit einem normgerechten Flickermeter bestimmt und beschreibt das kurzzeitige Auftreten des Netzflickers. Man beobachtet beim Einschmelzen des ersten Korbes K1 während der Bohrphase B einen starken Anstieg des Momentanflickers, dann einen charakteristischen Abfall und einen zweiten Anstieg während der so genannten Einsturzphase E, bei der noch nicht geschmolzener Schrott von den Ofenwänden in die geschmolzenen Zonen unter den Elektroden rutscht beziehungsweise ebenso einstürzt. Dieser Prozess führt zu hohen Flickerwerten. Bei dem zweiten Korb K2 wiederholt sich dieses Verhalten, wobei sich dann die so genannte Flachbadphase F anschließt, bei der der Schrott weitgehend geschmolzen ist und die Lichtbögen stabil auf der Schmelze brennen. Dies führt zu sehr geringen Flickerwerten. Der Verlauf und die Höhe des Flickers können jedoch je nach eingesetztem Schrott und Schmelzfahrweise sehr unterschiedlich verlaufen. Dies zeigen Figuren 2 und 3.

Figuren 2 und 3 zeigen deutlich, dass der Verlauf und die Höhe von Flicker je nach eingesetztem Schrott und Schmelzfahrweise sehr unterschiedlich verlaufen kann. Figuren 2 und 3 zeigen zwei verschiedene Szenarien in einem vergrößerten Maßstab für zwei Schmelzen. Während im ersten Szenario gemäß Figur 2 ein Verlauf wie in Figur 1 beschrieben dargestellt ist, findet in Figur 3 ein vollkommen anderer Verlauf des Momentanflickers als ein zweites Szenario statt. Im zweiten Szenario waren die Schrottzusammensetzung und eventuell auch die Betriebsparameter anders im Vergleich zum ersten Szenario in Figur 2, so dass der Flicker weder in der Bohrphase noch in der Einsturzphase wesentlich ansteigt und insgesamt sehr gering ist.

Szenario 1 zeigt in der Bohrphase B einen steilen Anstieg sowie hohe Flickerwerte. Szenario 2 gemäß Figur 3 zeigt einen flachen Anstieg in der Bohrphase B bei geringen Flickerwerten.

Figur 4 zeigt ein Ausführungsbeispiel eines erfindungsgemäßen Verfahrens.

Besonders vorteilhaft ist es, die Informationen aus dem Verlauf des Momentanflickers und den dazugehörigen Zustands- und Betriebsgrößen insbesondere in der Anfangsphase von ca. 100 bis 200 Sekunden beim Einschmelzen jedes Korbes K zu verwenden, um den zukünftigen Flicker vorherzusagen. Gemäß einem ersten Schritt S1 wird für jeden Ofen abhängig vom Schmelzprozess und Stahlgüten eine Wissensdatenbank über den Verlauf des Flicker erstellt, in dem eine ausreichende Anzahl von typischen Fällen gespeichert ist. In dieser so genannten Flickerdatenbank werden folgende Daten gespeichert:
Größe und Steigung des Momentanflickers in der Anfangsphase im Zeitbereich von ca. 100 bis 200 Sekunden und im weiteren Verlauf, sowie Korbnummer, Stahlgüte, elektrische Parameter, wie dies beispielsweise Spannung, Strom, Transformatorstufe, Drosselstufe, Wirk- und Scheinleistung usw. sein können, und Schrottparameter, wie dies beispielsweise die Schrottqualität, das Schrottvolumen, das Schrottgewicht usw. sein können. Mit einem zweiten Schritt S2 erfolgt eine Überführung dieser Flickerdatenbank in einen Klassifikator, mit dem eine Ähnlichkeitssuche über einen geeigneten Merkmalsraum, beispielsweise mit einem so genannten "nächsten Nachbarn"-Klassifikator durchgeführt werden kann. Dazu wird der, zu den gemessenen Momentanflickerwerten, die beispielsweise Größe und Steigung des Momentanflicker sein können, und den zugehörigen Zustands- und Betriebsgrößen ähnlichste Flickerverlauf gefunden. Dieser Klassifikator kann auch auf einer dynamisch wachsenden Wissensdatenbank arbeiten und als lernendes System realisiert werden. Die Wissensdatenbank kann auch in einer so genannten "Firmen-Cloud" dezentral gespeichert werden. Da hierbei Daten vieler verschiedener Schmelzöfen gespeichert werden, würde sich der anfängliche Lernaufwand verringern. Nachdem aus der Anfangsphase der wahrscheinlichste Flickerverlauf gefunden wurde, kann in einem dritten Schritt S3 die weitere Fahrweise dynamisch optimiert werden. Dazu kann man grob drei Fälle F1, F2 und F3 unterscheiden. Fall F1: Die vorhergesagten Flickerwerte liegen deutlich unter vorgegebenen Grenzwerten. In diesem Fall wird die Fahrweise auf optimalen Energieeintrag und höchste Performance getrimmt. Das bedeutet zum Beispiel für die Elektrodenregelung eine Einstellung für längere Lichtbögen und geringere Ströme. Fall F2: Die vorhergesagten Flickerwerte liegen über vorgegebenen Grenzwerten. In diesem Fall wird die Fahrweise für die Perioden, in denen die hohen Flickerwerte erwartet werden, angepasst, wie im Folgenden skizziert. Wie aus den Figuren 1 bis 3 ersichtlich war, treten die Perioden mit hohen Flickerwerten insbesondere am Ende der Bohrphase, also ca. 100 bis 250 Sekunden nach Schmelzbeginn, für jeden Korb K und in der Einsturzphase E auf. Die Induktivität kann in diesen Perioden durch höhere Drosselstufen oder durch Hinzuschalten einer Drossel oder Spule erhöht werden, was stabilere Lichtbögen zur Folge hat. Die Elektrodenregelung wird für kürzere Lichtbögen mit höheren Strömen eingestellt. Des Weiteren könnten gezielte periodische Bewegungen in den Lichtbögen speziell in der Einsturzphase E zur Flickerverringerung führen. Außerdem kann eine eventuell vorhandene SVC dynamisch anders parametriert werden. Fall 3: Hier liegen die vorhergesagten Flickerwerte in einem Grenzbereich. Es kann nun ein Kompromiss zwischen einer hohen Einschmelzperformance und der Flickerreduktion in den Perioden mit hohen Flickerwerten eingestellt werden. Insbesondere kann die Flickerreduktion am Ende einer Bohrphase B und während einer Einsturzphase E ausgeführt werden.

Die hier vorgeschlagenen Verfahren gewährleisten eine optimale Einschmelzperformance und können die Flickerwerte im Allgemeinen unter vorgegebene Grenzwerte halten. Eine absolute Sicherheit dafür gibt es aber nicht, da das Verfahren auf einer Vorhersage beruht und zukünftig auftretende Flickerwerte davon abweichen können. Zum Beispiel unterliegen Schrotteinstürze einer gewissen Zufälligkeit.

Die vorliegende Erfindung nutzt die Erkenntnis, dass die zu erwartenden Flickerwerte sich mit hoher Wahrscheinlichkeit aus geeigneten Zustands- und Betriebsgrößen bestimmen lassen, die während der ersten Minuten in der Einschmelzphase erfasst werden. Auf diese Weise kann Flicker wirksam verringert und unter vorgegebenen Grenzwerten gehalten werden. Die Erfindung eignet sich insbesondere bei der Stahlerzeugung unter Verwendung von Elektrolichtbogenöfen.

## Patentansprüche

1. Verfahren zur Flickerreduktion bei einer Stahlerzeugung mittels eines Elektrolichtbogenofens, mit den Schritten
- mittels einer Speichereinrichtung ausgeführtes Bereitstellen einer Flickerdatenbank, in der zeitliche Gesamtverläufe von Momentanflicker (MF) in Abhängigkeit von Zustands- und Betriebsgrößen gespeichert werden;
- mittels einer Erfassungseinrichtung während einer anfänglichen Einschmelzphase der Stahlerzeugung ausgeführtes Messen eines zeitlichen Verlaufs von Momentanflicker und Bestimmen von dazugehörigen Zustands- und Betriebsgrößen;
- mittels einer Rechnereinrichtung ausgeführtes Vergleichen des gemessenen zeitlichen Verlaufs von Momentanflicker während der Einschmelzphase mit den gespeicherten zeitlichen Verläufen der Einschmelzphasen der Gesamtverläufe der Flickerdatenbank unter Berücksichtigung der Zustands- und Betriebsgrößen;
- mittels der Rechnereinrichtung ausgeführtes Auswählen eines zeitlichen Gesamtverlaufs mit maximaler Übereinstimmung von Momentanflicker sowie Zustands- und Betriebsgrößen als ein vorhergesagter Gesamtverlauf des Flicker;
- mittels einer Steuerungseinrichtung ausgeführtes präventives dynamisches Anpassen des weiteren Steuerns des Stahlerzeugungsprozesses bei Vergleichen des vorhergesagten Gesamt-verlaufs mit vorgegebenen Grenzwerten für Flicker.

2. Verfahren nach Anspruch 1, **dadurch gekennzeichnet, dass** jeweils Größe und Steigung von Momentanflicker gespeichert und gemessen werden.

3. Verfahren nach Anspruch 1 oder 2, **dadurch gekennzeichnet, dass** Zustands- und Betriebsgrößen eine Korbnummer, eine Stahlgüte, elektrische Parameter und Schrottparameter sind.

4. Verfahren nach Anspruch 1, 2 oder 3, **dadurch gekennzeichnet, dass** eine jeweilige anfängliche Einschmelzphase jeweils eine Bohrphase (B) und eine Einsturzphase (E) für jeweils mittels eines Korbes eingebrachten Schrott aufweist und das Messen und das Bestimmen jeweils während der ersten hundert bis zweihundert Sekunden nach dem Schmelzen des eingebrachten Schrotts erfolgt.

5. Verfahren nach einem der vorangehenden Ansprüche 1 bis 4, **dadurch gekennzeichnet, dass** die vorhergesagten Flickerwerte kleiner als die vorgegebenen Grenzwerte sind und die Steuerungseinrichtung den Stahlerzeugungsprozess zum Erreichen maximalen Leistungsvermögens bei optimalem Energieeintrag steuert.

6. Verfahren nach einem der vorangehenden Ansprüche 1 bis 4, **dadurch gekennzeichnet, dass** vorhergesagte Flickerwerte größer als die vorgegebenen Grenzwerte sind und die Steuerungseinrichtung den Stahlerzeugungsprozess während der Zeitdauer(n) der als größer vorhergesagten Flickerwerte zur Flickerreduzierung angepasst steuert.

7. Verfahren nach Anspruch 6, **dadurch gekennzeichnet, dass** die Steuereinrichtung die Zusatzinformation hat, dass die als größer vorhergesagten Flickerwerte für einen jeden Korb bevorzugt am Ende einer Bohrphase und/oder während einer Einsturzphase auftreten.

8. Verfahren nach Anspruch 6 oder 7, **dadurch gekennzeichnet, dass** die Steuerungseinrichtung während der Zeitdauer(n) der als größer vorhergesagten Flickerwerte die Induktivität des Elektrolichtbogenofens mittels höherer Drosselstufen oder Hinzuschalten einer Drossel vergrößert.

9. Verfahren nach Anspruch 6, 7 oder 8, **dadurch gekennzeichnet, dass** die Steuerungseinrichtung während der Zeitdauer(n) der als größer vorhergesagten Flickerwerte mittels einer Elektrodenregelung kürzere Lichtbögen mit größeren Strömen einstellt.

10. Verfahren nach Anspruch 6, 7, 8 oder 9, **dadurch gekennzeichnet, dass** die Steuerungseinrichtung während der Zeitdauer(n) der als größer vorhergesagten Flickerwerte gezielte periodische Bewegungen in den Lichtbögen einprägt.

11. Verfahren nach Anspruch 6, 7, 8 oder 9, **dadurch gekennzeichnet, dass** die Steuerungseinrichtung während der Zeitdauer(n) der als größer vorhergesagten Flickerwerte eine bereits vorhandene Kompensationsanlage dynamisch angepasst neu parametriert.

12. Verfahren nach einem der vorangehenden Ansprüche 1 bis 4, **dadurch gekennzeichnet, dass** die vorhergesagten Flickerwerte in einem Grenzbereich zu den vorgegebenen Grenzwerten liegen und die Steuerungseinrichtung den Stahlerzeugungsprozess zwischen maximalem Leistungsvermögen und Flickerreduktion ansteuert.

13. Verfahren nach Anspruch 12, **dadurch gekennzeichnet, dass** die Steuerungseinrichtung den Stahlerzeugungsprozess während der Zeitdauer(n) am Ende einer Bohrphase für einen jeden Korb und während einer Einsturzphase zur Flickerreduzierung angepasst steuert.

14. Vorrichtung zur Flickerreduktion gemäß einem der vorhergehenden Ansprüche bei einer Stahlerzeugung mittels eines Elektrolichtbogenofens , wobei
- eine Speichereinrichtung eine Flickerdatenbank bereitstellt, in der zeitliche Gesamtverläufe von Momentanflicker in Abhängigkeit von Zustands- und Betriebsgrößen gespeichert sind;
- eine Erfassungseinrichtung während einer anfänglichen Einschmelzphase der Stahlerzeugung einen zeitlichen Verlauf von Momentanflicker misst und dazugehörige Zustands- und Betriebsgrößen bestimmt;
- eine Rechnereinrichtung den gemessenen zeitlichen Verlauf von Momentanflicker während der Einschmelzphase mit den gespeicherten zeitlichen Verläufen der Einschmelzphasen der Gesamtverläufe der Flickerdatenbank unter Berücksichtigung der Zustands- und Betriebsgrößen vergleicht;
- die Rechnereinrichtung einen zeitlichen Gesamtverlauf mit maximaler Übereinstimmung von Momentanflicker sowie Zustands- und Betriebsgrößen als ein vorhergesagter Gesamtverlauf des Flicker auswählt;
- eine Steuerungseinrichtung das weitere Steuern des Stahlerzeugungsprozesses bei Vergleichen des vorhergesagten Gesamtverlaufs mit vorgegebenen Grenzwerten für Flicker präventiv dynamisch anpasst.

## Claims

1. Method for flicker reduction in steel production by means of an electric arc furnace, having the following steps
- providing a flicker database by means of a storage unit, in which overall time curves of instantaneous flicker (MF) are stored in dependence on state variables and operating variables;
- measuring a time curve of instantaneous flicker by means of a capture device during an initial melting phase of the steel production and determining associated state variables and operating variables;
- comparing the measured time curve of instantaneous flicker during the melting phase to the stored time curves of the melting phases of the overall curves of the flicker database with consideration of the state variables and operating variables by means of a computer unit;
- selecting an overall time curve having maximum correspondence of instantaneous flicker and also state variables and operating variables as a predicted overall curve of the flicker by means of the computer unit;
- executing preventive dynamic adaptation of the further control of the steel production process upon comparison of the predicted overall curve to predefined limiting values for flicker by means of a control unit.

2. Method according to Claim 1, **characterized in that** in each case dimension and slope of instantaneous flicker are stored and measured.

3. Method according to Claim 1 or 2, **characterized in that** state variables and operating variables are a basket number, a steel quality, electrical parameters, and scrap metal parameters.

4. Method according to Claim 1, 2, or 3, **characterized in that** a respective initial melting phase has in each case a drilling phase (B) and a collapse phase (E) for scrap metal introduced in each case by means of a basket, and the measurement and the determination take place in each case during the first 100 to 200 seconds after the melting of the introduced scrap metal.

5. Method according to any one of the preceding Claims 1 to 4, **characterized in that** the predicted flicker values are less than the predefined limiting values and the control unit controls the steel production process to achieve maximum capacity with optimum energy introduction.

6. Method according to any one of the preceding Claims 1 to 4, **characterized in that** predicted flicker values are greater than the predefined limiting values and the control unit controls the steel production process in a manner adapted for flicker reduction during the time(s) of the flicker values which are greater than predicted.

7. Method according to Claim 6, **characterized in that** the control unit has the auxiliary information that the flicker values which are greater than predicted preferentially occur for each basket at the end of a drilling phase and/or during a collapse phase.

8. Method according to Claim 6 or 7, **characterized in that** the control unit increases the inductance of the electric arc furnace by means of higher throttle steps or switching in a throttle during the time(s) of the flicker values which are greater than predicted.

9. Method according to Claim 6, 7, or 8, **characterized in that** the control unit sets shorter electric arcs having greater currents by means of electrode regulation during the time(s) of the flicker values which are greater than predicted.

10. Method according to Claim 6, 7, 8, or 9, **characterized in that** the control unit applies targeted periodic movements to the electric arcs during the time(s) of the flicker values which are greater than predicted.

11. Method according to Claim 6, 7, 8, or 9, **characterized in that** the control unit re-parameterizes an already existing compensation system in a dynamically adapted manner during the time(s) of the flicker values which are greater than predicted.

12. Method according to any one of the preceding Claims 1 to 4, **characterized in that** the predicted flicker values lie in a border region to the predefined limiting values and the control unit controls the steel production process between maximum capacity and flicker reduction.

13. Method according to Claim 12, **characterized in that** the control unit controls the steel production process in a manner adapted for flicker reduction during the time(s) at the end of a drilling phase for each basket and during a collapse phase.

14. Device for flicker reduction according to any one of the preceding Claims in steel production by means of an electric arc furnace, wherein
- a storage unit provides a flicker database, in which overall time curves of instantaneous flicker are stored in dependence on state variables and operating variables;
- a capture device measures a time curve of instantaneous flicker during an initial melting phase of the steel production and determines associated state variables and operating variables;
- a computer unit compares the measured time curve of instantaneous flicker during the melting phase to the stored time curves of the melting phases of the overall curves of the flicker database with consideration of the state variables and operating variables;
- the computer unit selects an overall time curve having maximum correspondence of instantaneous flicker and also state variables and operating variables as a predicted overall curve of the flicker;
- a control unit preventively dynamically adapts the further control of the steel production process upon comparison of the predicted overall curve to predefined limiting values for flicker.

## Revendications

1. Procédé pour la réduction du scintillement lors d'une production d'acier au moyen d'un four à arc électrique, avec les étapes de
- mise à disposition, exécutée au moyen d'un dispositif de stockage, d'une banque de données de scintillement où sont stockées en fonction de grandeurs d'état et d'exploitation des évolutions globales dans le temps de scintillements momentanés (MF) ;
- mesure, exécutée au moyen d'un dispositif d'acquisition pendant une phase de fusion initiale de la production d'acier, d'une évolution dans le temps de scintillements momentanés et détermination des grandeurs d'état et d'exploitation correspondantes ;
- comparaison, exécutée au moyen d'un dispositif de calcul, de l'évolution dans le temps mesurée de scintillements momentanés pendant la phase de fusion avec les évolutions dans le temps stockées des phases de fusion des évolutions globales de la banque de données de scintillement en prenant en compte les grandeurs d'état et d'exploitation ;
- sélection, exécutée au moyen du dispositif de calcul, d'une évolution globale dans le temps avec une concordance maximale des scintillements momentanés ainsi que des grandeurs d'état et d'exploitation en tant qu'évolution globale prédite du scintillement ;
- adaptation dynamique préventive, exécutée au moyen d'un dispositif de commande, de la suite de la commande du processus de fabrication d'acier lors de la comparaison de l'évolution globale prédite avec les valeurs seuils prédéfinies pour le scintillement.

2. Procédé selon la revendication 1, **caractérisé en ce que** respectivement la grandeur et l'augmentation des scintillements momentanés sont stockées et mesurées.

3. Procédé selon la revendication 1 ou 2, **caractérisé en ce que** les grandeurs d'état et d'exploitation sont un numéro de panier, des articles en acier, des paramètres électriques et des paramètres de ferraille.

4. Procédé selon la revendication 1, 2 ou 3, **caractérisé en ce qu'**une phase de fusion initiale respective présente respectivement une phase de perçage (B) et une phase d'écroulement (E) pour respectivement une ferraille installée au moyen d'un panier et la mesure et la détermination sont effectuées respectivement pendant les premières cent à deux cents secondes après la fusion de la ferraille installée.

5. Procédé selon l'une des revendications précédentes 1 à 4, **caractérisé en ce que** les valeurs de scintillement prédites sont plus petites que les valeurs seuils prédéfinies et le dispositif de commande commande le processus de fabrication d'acier de manière à atteindre des performances maximales lors d'un apport d'énergie optimal.

6. Procédé selon l'une des revendications précédentes 1 à 4, **caractérisé en ce que** les valeurs de scintillement prédites sont plus grandes que les valeurs seuils prédéfinies et le dispositif de commande commande de manière adaptée le processus de fabrication d'acier pendant la ou les durées des valeurs de scintillement prédites comme étant plus grandes pour la réduction du scintillement.

7. Procédé selon la revendication 6, **caractérisé en ce que** le dispositif de commande a des informations complémentaires, **en ce que** les valeurs de scintillement prédites comme étant plus grandes sont générées pour chaque panier de préférence à la fin d'une phase de perçage et/ou pendant une phase d'écroulement.

8. Procédé selon la revendication 6 ou 7, **caractérisé en ce que** le dispositif de commande agrandit pendant la ou les durées des valeurs de scintillement prédites comme étant plus grandes l'inductance du four à arc électrique au moyen d'étages d'étranglement plus hauts ou de l'ajout d'un étranglement.

9. Procédé selon la revendication 6, 7 ou 8, **caractérisé en ce que** le dispositif de commande pendant la ou les durées des valeurs de scintillement prédites comme étant plus grandes règle des arcs électriques plus courts au moyen d'un réglage d'électrodes avec des courants plus grands.

10. Procédé selon la revendication 6, 7, 8 ou 9, **caractérisé en ce que** le dispositif de commande mémorise pendant la ou les durées des valeurs de scintillement prédites comme étant plus grandes des mouvements périodiques ciblés dans les arcs électriques.

11. Procédé selon la revendication 6, 7, 8 ou 9, **caractérisé en ce que** le dispositif de commande paramètre à nouveau de manière dynamique et adaptée pendant la ou les durées des valeurs de scintillement prédites comme étant plus grandes une installation de compensation déjà présente.

12. Procédé selon l'une des revendications précédentes 1 à 4, **caractérisé en ce que** les valeurs de scintillement prédites se trouvent dans une zone seuil par rapport aux valeurs seuils prédéfinies et le dispositif de commande pilote le processus de fabrication d'acier entre des performances maximales et une réduction du scintillement.

13. Procédé selon la revendication 12, **caractérisé en ce que** le dispositif de commande commande de manière adaptée le processus de fabrication d'acier pendant la ou les durées à la fin d'une phase de perçage pour chaque panier et pendant une phase d'écroulement pour la réduction du scintillement.

14. Dispositif pour la réduction du scintillement selon l'une des revendications précédentes lors d'une production d'acier au moyen d'un four à arc électrique, dans lequel
- un dispositif de stockage met à disposition une banque de données de scintillement, dans laquelle des évolutions globales dans le temps de scintillements momentanés en fonction de grandeurs d'état et d'exploitation sont stockées ;
- un dispositif d'acquisition mesure pendant une phase de fusion initiale de la production d'acier une évolution dans le temps de scintillements momentanés et détermine des grandeurs d'état et d'exploitation correspondantes ;
- un dispositif de calcul compare l'évolution dans le temps mesurée de scintillements momentanés pendant la phase de fusion avec les évolutions dans le temps stockées des phases de fusion des évolutions globales de la banque de données de scintillement en prenant en compte les grandeurs d'état et d'exploitation ;
- le dispositif de calcul sélectionne une évolution globale dans le temps avec une concordance maximale de scintillements momentanés ainsi que de grandeurs d'état et d'exploitation en tant qu'évolution globale prédite du scintillement ;
- un dispositif de commande adapte de manière préventive et dynamique la suite de la commande du processus de fabrication d'acier lors de la comparaison de l'évolution globale prédite avec des valeurs seuils prédéfinies pour le scintillement.
